(19) **Europäisches Patentamt / European Patent Office / Office européen des brevets**

(11) **EP 4 679 905 A1**

(12) # EUROPEAN PATENT APPLICATION
published in accordance with Art. 153(4) EPC

(43) Date of publication:
**14.01.2026 Bulletin 2026/03**

(21) Application number: **24755963.6**

(22) Date of filing: **30.01.2024**

(51) International Patent Classification (IPC):
**H04W 72/02** (2009.01)

(52) Cooperative Patent Classification (CPC):
**H04W 72/02; H04W 72/044; H04W 72/0446;**
**H04W 72/0453; H04W 72/12; H04W 72/231;**
**H04W 72/232; H04W 72/53; H04W 72/542**

(86) International application number:
**PCT/CN2024/074647**

(87) International publication number:
**WO 2024/169589 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.02.2023 CN 202310151168**

(71) Applicant: **Huawei Technologies Co., Ltd.**
**Shenzhen, Guangdong 518129 (CN)**

(72) Inventors:
- **ZHANG, Yi**
  **Shenzhen, Guangdong 518129 (CN)**
- **YI, Feng**
  **Shenzhen, Guangdong 518129 (CN)**
- **XU, Jiaojiao**
  **Shenzhen, Guangdong 518129 (CN)**
- **SU, Hongjia**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) ## COMMUNICATION METHOD AND RELATED APPARATUS

(57) A communication method and a related apparatus are provided. The method includes: determining a first candidate resource set corresponding to a first beam, where the first beam is any beam in a beam set, and the beam set includes a plurality of beams; determining a first time-frequency resource based on the first candidate resource set; and sending first sidelink information to a first terminal device on the first time-frequency resource by using the first beam. According to the method in this application, resource selection in FR2 can be implemented.

```
┌──────────────────┐                      ┌──────────────┐
│ Second terminal  │                      │ First terminal│
│     device       │                      │    device    │
└──────────────────┘                      └──────────────┘
         │                                        │
┌─────────────────────┐                           │
│ S301: Determine a   │                           │
│ first candidate     │                           │
│ resource set        │                           │
│ corresponding to a  │                           │
│ first beam          │                           │
└─────────────────────┘                           │
         │                                        │
┌─────────────────────┐                           │
│ S302: Determine a   │                           │
│ first time-         │                           │
│ frequency resource  │                           │
│ based on the first  │                           │
│ candidate resource  │                           │
│ set                 │                           │
└─────────────────────┘                           │
         │                                        │
         │  S303: Send first sidelink information │
         │  to the first terminal device on the   │
         │  first time-frequency resource by      │
         │  using the first beam                  │
         │ ───────────────────────────────────►  │
         │                                        │
```

FIG. 3

**Description**

This application claims priority to Chinese Patent Application No. 202310151168.1, filed with the China National Intellectual Property Administration on February 15, 2023, and entitled "COMMUNICATION METHOD AND RELATED APPARATUS", which is incorporated herein by reference in its entirety.

**TECHNICAL FIELD**

This application relates to the field of communication technologies, and in particular, to a communication method and a related apparatus.

**BACKGROUND**

An existing resource selection process is designed for a distributed sidelink (sidelink, SL) system in a frequency range 1 (frequency range 1, FR1). A terminal device excludes, from a selection window based on a sensing result in a sensing window of the terminal device, a resource reserved by another terminal device, and selects a resource from remaining available resources to send data, so that a sending conflict between the terminal device and the another terminal device is avoided. However, design of a resource selection process in FR2 is temporarily not discussed.

**SUMMARY**

This application provides a communication method and a related apparatus, to implement resource selection in FR2.

According to a first aspect, this application provides a communication method. The method is applied to a second terminal device, and the method includes:

determining a first candidate resource set corresponding to a first beam, where the first beam is any beam in a beam set, and the beam set includes a plurality of beams;
determining a first time-frequency resource based on the first candidate resource set; and
sending first sidelink information to a first terminal device on the first time-frequency resource by using the first beam.

In this application, a procedure that is of resource selection in FR2 and that is performed by an SL system is defined. An available candidate resource set is determined by using a beam as a unit, to prevent a transmitter UE (namely, the second terminal device) from selecting a resource on which a conflict occurs, thereby reducing the sending conflict.

In a possible implementation, determining the first candidate resource set corresponding to the first beam includes:
receiving first indication information from the first terminal device, where the first indication information indicates the first beam and the first candidate resource set corresponding to the first beam.

In this implementation, a method in which a receiver UE (namely, the first terminal device) indicates the available candidate resource set to the transmitter UE can be used for preventing the transmitter UE from selecting the resource on which the conflict occurs, thereby reducing the sending conflict.

In a possible implementation, the first indication information includes a correspondence between the first beam and the first candidate resource set, and the first candidate resource set; and
the correspondence between the first beam and the first candidate resource set is indicated by using a first sidelink transmission configuration indication SL TCI state identifier of a first reference signal.

In this implementation, the beam and the corresponding candidate resource set are indicated by using a TCI state configuration method, and operability is high. Specifically, two possible manners are included:

1. The receiver UE indicates a TCI state of a reference signal of the receiver UE, to be specific, notifies, by indicating a receive beam of the receiver UE, the transmitter UE of the first beam corresponding to the first candidate resource set (the transmitter UE knows a correspondence between a transmit beam and the receive beam).
2. The receiver UE indicates a TCI state of a reference signal of the transmitter UE, to be specific, notifies, by indicating the transmit beam of the transmitter UE, the transmitter UE of the first beam corresponding to the first candidate resource set.

In a possible implementation, the first SL TCI state identifier is carried in sidelink control information SCI and/or a medium access control control element MAC CE.

In this implementation, the first SL TCI state identifier may be carried in a plurality of types of information, and there are diverse implementations.

In a possible implementation, determining the first candidate resource set corresponding to the first beam includes:

receiving second indication information from another terminal device in a sensing window of the first beam by using the first beam; and

determining, in a selection window of the first beam based on a time-frequency resource indicated by the second indication information of the another terminal device, the first candidate resource set corresponding to the first beam.

In this implementation, the transmitter UE may also determine the available candidate resource set based on a sensing result of the transmitter UE, and the operability is high.

In a possible implementation, determining the first time-frequency resource based on the first candidate resource set includes:

determining the first time-frequency resource based on an intersection set of the first candidate resource set and a second candidate resource set, where

the second candidate resource set is a candidate resource set corresponding to a second beam, and the second beam is a neighboring beam of the first beam.

In this implementation, because information receiving and sending between adjacent beams may affect each other, a result of sensing and resource selection of the neighboring beam needs to be considered during directional resource sensing, to avoid generation of additional interference.

In a possible implementation, that the first beam and the second beam are adjacent beams is predefined, configured, or preconfigured; and/or

an included angle between a main lobe direction of the first beam and a main lobe direction of the second beam is less than or equal to a preset angle; and/or

a reference signal received power RSRP measurement result of the first beam and an RSRP measurement result of the second beam are greater than or equal to a first threshold; and/or

an absolute value of a difference between the reference signal received power RSRP measurement result of the first beam and the RSRP measurement result of the second beam is less than or equal to a second threshold.

In this implementation, a plurality of manners of determining the adjacent beams are defined, there are diverse implementations, and adaptability is high.

In a possible implementation, the first sidelink information includes a second time-frequency resource, the first candidate resource set includes the second time-frequency resource, and the method further includes:

receiving conflict indication information from the first terminal device, where the conflict indication information indicates that a conflict occurs on the second time-frequency resource.

In this implementation, the conflict indication information is defined. After receiving the conflict indication information from the receiver UE, the transmitter UE may not send the conflict indication information. This helps avoid the conflict.

In a possible implementation, the conflict indication information includes location information of an overlapping time-frequency resource of the second time-frequency resource and a third time-frequency resource, or the conflict indication information includes the second time-frequency resource.

In this implementation, the conflict indication information may include a specific location of the time-frequency resource on which the conflict occurs, or include the time-frequency resource reserved by the transmitter UE. There are diverse implementations.

In a possible implementation, the third time-frequency resource is a time-frequency resource of a third terminal device, and a data priority of the third terminal device is higher than a data priority of the second terminal device.

In this implementation, when there are a plurality of transmitter UEs (for example, the second terminal device and the third terminal device) that have a sending conflict, a receiver of the conflict indication information should be the transmitter UE (for example, the second terminal device) with a lower data priority.

In a possible implementation, the conflict indication information further includes information about the first beam associated with the second time-frequency resource.

In this implementation, the conflict indication information may further include beam information. In this implementation, the transmitter UE may be notified of a beam of the receiver UE/the transmitter UE on which the conflicting resource occurs. In this way, the transmitter UE may subsequently choose to use different transmit and receive beam pairs to avoid the conflict.

In a possible implementation, the conflict indication information is carried in SCI or a MAC CE.

In this implementation, the conflict indication information may be carried in a plurality of types of information, and there are diverse implementations.

According to a second aspect, this application provides a communication method. The method is applied to a first terminal device, and the method includes:

determining a first candidate resource set corresponding to a first beam, where the first beam is any beam in a beam set, and the beam set includes a plurality of beams;

sending first indication information to a second terminal device, where the first indication information indicates the first beam and the first candidate resource set corresponding to the first beam; and

receiving, on a first time-frequency resource, first sidelink information from the second terminal device by using a third beam, where the first candidate resource set includes the first time-frequency resource.

In a possible implementation, the first indication information includes a correspondence between the first beam and the first candidate resource set, and the first candidate resource set; and

the correspondence between the first beam and the first candidate resource set is indicated by using a first sidelink transmission configuration indication SL TCI state identifier of a first reference signal. Specifically, two possible manners are included:

1. A receiver UE indicates a TCI state of a reference signal of the receiver UE, to be specific, notifies, by indicating a receive beam of the receiver UE, a transmitter UE of the first beam corresponding to the first candidate resource set (the transmitter UE knows a correspondence between a transmit beam and the receive beam).

2. The receiver UE indicates a TCI state of a reference signal of the transmitter UE, to be specific, notifies, by indicating the transmit beam of the transmitter UE, the transmitter UE of the first beam corresponding to the first candidate resource set.

In a possible implementation, the first SL TCI state identifier is carried in sidelink control information SCI and/or a medium access control control element MAC CE.

In a possible implementation, determining the first candidate resource set corresponding to the first beam includes:

receiving second indication information from at least one terminal device in a sensing window of the third beam by using the third beam, where the at least one terminal device includes the second terminal device, and second indication information of any one of the at least one terminal device includes a time-frequency resource of the any terminal device; and

determining, in a selection window of the third beam based on a time-frequency resource of the at least one terminal device, the first candidate resource set corresponding to the first beam.

In a possible implementation, the first sidelink information includes a second time-frequency resource, the first candidate resource set includes the second time-frequency resource, and the method further includes:

receiving third indication information from a third terminal device, where the third indication information includes a third time-frequency resource of the third terminal device; and

if the second time-frequency resource and the third time-frequency resource overlap, and a data priority of the third terminal device is higher than a data priority of the second terminal device, sending conflict indication information to the second terminal device, where

the conflict indication information indicates that a conflict occurs on the second time-frequency resource.

In a possible implementation, the conflict indication information includes location information of an overlapping time-frequency resource of the second time-frequency resource and the third time-frequency resource, or the conflict indication information includes the second time-frequency resource.

In a possible implementation, the conflict indication information further includes information about the first beam associated with the second time-frequency resource.

In a possible implementation, the conflict indication information is carried in SCI or a MAC CE.

According to a third aspect, this application provides a communication apparatus. The apparatus is a second terminal device, and the apparatus includes:

a processing unit, configured to determine a first candidate resource set corresponding to a first beam, where the first beam is any beam in a beam set, and the beam set includes a plurality of beams;

the processing unit, configured to determine a first time-frequency resource based on the first candidate resource set; and

a transceiver unit, configured to send first sidelink information to a first terminal device on the first time-frequency resource by using the first beam.

In a possible implementation, when determining the first candidate resource set corresponding to the first beam, the processing unit is configured to:

receive first indication information from the first terminal device, where the first indication information indicates the first beam and the first candidate resource set corresponding to the first beam.

In a possible implementation, the first indication information includes a correspondence between the first beam and the first candidate resource set, and the first candidate resource set; and

the correspondence between the first beam and the first candidate resource set is indicated by using a first sidelink transmission configuration indication SL TCI state identifier of a first reference signal.

In a possible implementation, the first SL TCI state identifier is carried in sidelink control information SCI and/or a medium access control control element MAC CE.

In a possible implementation, when determining the first candidate resource set corresponding to the first beam, the processing unit is configured to:

receive second indication information from another terminal device in a sensing window of the first beam by using the first beam; and

determine, in a selection window of the first beam based on a time-frequency resource indicated by the second indication information of the another terminal device, the first candidate resource set corresponding to the first beam.

In a possible implementation, when determining the first time-frequency resource based on the first candidate resource set, the processing unit is configured to:

determine the first time-frequency resource based on an intersection set of the first candidate resource set and a second candidate resource set, where

the second candidate resource set is a candidate resource set corresponding to a second beam, and the second beam is a neighboring beam of the first beam.

In a possible implementation, that the first beam and the second beam are adjacent beams is predefined, configured, or preconfigured; and/or

an included angle between a main lobe direction of the first beam and a main lobe direction of the second beam is less than or equal to a preset angle; and/or

a reference signal received power RSRP measurement result of the first beam and an RSRP measurement result of the second beam are greater than or equal to a first threshold; and/or

an absolute value of a difference between the reference signal received power RSRP measurement result of the first beam and the RSRP measurement result of the second beam is less than or equal to a second threshold.

In a possible implementation, the first sidelink information includes a second time-frequency resource, the first candidate resource set includes the second time-frequency resource, and the transceiver unit is further configured to:

receive conflict indication information from the first terminal device, where the conflict indication information indicates that a conflict occurs on the second time-frequency resource.

In a possible implementation, the conflict indication information includes location information of an overlapping time-frequency resource of the second time-frequency resource and a third time-frequency resource, or the conflict indication information includes the second time-frequency resource.

In a possible implementation, the third time-frequency resource is a time-frequency resource of a third terminal device, and a data priority of the third terminal device is higher than a data priority of the second terminal device.

In a possible implementation, the conflict indication information further includes information about the first beam associated with the second time-frequency resource.

In a possible implementation, the conflict indication information is carried in SCI or a MAC CE.

According to a fourth aspect, this application provides a communication apparatus. The apparatus is a first terminal device, and the apparatus includes:

a processing unit, configured to determine a first candidate resource set corresponding to a first beam, where the first beam is any beam in a beam set, and the beam set includes a plurality of beams;

a transceiver unit, configured to send first indication information to a second terminal device, where the first indication information indicates the first beam and the first candidate resource set corresponding to the first beam; and

the transceiver unit, configured to receive, on a first time-frequency resource, first sidelink information from the second terminal device by using a third beam, where the first candidate resource set includes the first time-frequency resource.

In a possible implementation, the first indication information includes a correspondence between the first beam and the first candidate resource set, and the first candidate resource set; and

the correspondence between the first beam and the first candidate resource set is indicated by using a first sidelink transmission configuration indication SL TCI state identifier of a first reference signal.

In a possible implementation, the first SL TCI state identifier is carried in sidelink control information SCI and/or a medium access control control element MAC CE.

In a possible implementation, when determining the first candidate resource set corresponding to the first beam, the processing unit is configured to:

receive second indication information from at least one terminal device in a sensing window of the third beam by using the third beam, where the at least one terminal device includes the second terminal device, and second indication information of any one of the at least one terminal device includes a time-frequency resource of the any terminal device; and

determine, in a selection window of the third beam based on a time-frequency resource of the at least one terminal device, the first candidate resource set corresponding to the first beam.

In a possible implementation, the first sidelink information includes a second time-frequency resource, the first candidate resource set includes the second time-frequency resource, and the transceiver unit is further configured to:

receive third indication information from a third terminal device, where the third indication information includes a third time-frequency resource of the third terminal device; and

if the second time-frequency resource and the third time-frequency resource overlap, and a data priority of the third terminal device is higher than a data priority of the second terminal device, send conflict indication information to the second terminal device, where

the conflict indication information indicates that a conflict occurs on the second time-frequency resource.

In a possible implementation, the conflict indication information includes location information of an overlapping time-frequency resource of the second time-frequency resource and the third time-frequency resource, or the conflict indication information includes the second time-frequency resource.

In a possible implementation, the conflict indication information further includes information about the first beam associated with the second time-frequency resource.

In a possible implementation, the conflict indication information is carried in SCI or a MAC CE.

According to a fifth aspect, this application provides a communication apparatus. The communication apparatus may be a second terminal device, and includes a processor, a transceiver, and a memory. The processor, the transceiver, and the memory are coupled, and the memory stores a computer program. The processor and the transceiver are configured to invoke the computer program in the memory, to enable the communication apparatus to perform the method according to any one of the implementations of the first aspect.

In a possible design, the communication apparatus may be a chip that implements the method in the first aspect or a device that includes the chip.

According to a sixth aspect, this application provides a communication apparatus. The communication apparatus may be a first terminal device, and includes a processor, a transceiver, and a memory. The processor, the transceiver, and the memory are coupled, and the memory stores a computer program. The processor and the transceiver are configured to invoke the computer program in the memory, to enable the communication apparatus to perform the method according to any one of the implementations of the second aspect.

In a possible design, the communication apparatus may be a chip that implements the method in the second aspect or a device that includes the chip.

According to a seventh aspect, this application provides a communication apparatus. The communication apparatus may be a second terminal device, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the implementations of the first aspect by using a logic circuit or by executing code instructions.

According to an eighth aspect, this application provides a communication apparatus. The communication apparatus may be a first terminal device, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the implementations of the second aspect by using a logic circuit or by executing code instructions.

According to a ninth aspect, this application provides a computer-readable storage medium. The storage medium stores a computer program or instructions. When the computer program or the instructions are executed by a computer, the method according to any one of the implementations of the first aspect is implemented.

According to a tenth aspect, this application provides a computer-readable storage medium. The storage medium stores a computer program or instructions. When the computer program or the instructions are executed by a computer, the method according to any one of the implementations of the second aspect is implemented.

According to an eleventh aspect, this application provides a computer program product. When a computer reads and executes the computer program product, the computer is enabled to perform the method according to any one of the implementations of the first aspect.

According to a twelfth aspect, this application provides a computer program product. When a computer reads and executes the computer program product, the computer is enabled to perform the method according to any one of the implementations of the second aspect.

According to a thirteenth aspect, this application provides a communication system. The communication system includes the second terminal device in the third aspect, the fifth aspect, or the seventh aspect, and the first terminal device in the fourth aspect, the sixth aspect, or the eighth aspect.

## BRIEF DESCRIPTION OF DRAWINGS

FIG. 1 is a diagram of an architecture of a communication system according to an embodiment of this application;
FIG. 2 is a diagram of a hardware structure of a communication apparatus applicable to an embodiment of this application;
FIG. 3 is an interaction diagram of a communication method according to an embodiment of this application;
FIG. 4 is a diagram of a beam sweeping process according to an embodiment of this application;
FIG. 5 is a diagram of a sensing window according to an embodiment of this application;
FIG. 6 is a diagram of a scenario of determining a candidate resource set according to an embodiment of this application;
FIG. 7 is a diagram of a scenario of interference between adjacent beams according to an embodiment of this application;
FIG. 8 is a diagram of a scenario of determining a candidate resource set in a scenario of adjacent beams according to an embodiment of this application;
FIG. 9 is a diagram of a scenario of determining adjacent beams according to an embodiment of this application;
FIG. 10 is a diagram of a scenario of sending conflict indication information according to an embodiment of this application;
FIG. 11 is a diagram of another scenario of sending conflict indication information according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of another communication apparatus according to an embodiment of this application.

## DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. "And/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following explains and describes some nouns (or communication terms) in this application.

1. Cellular vehicle-to-everything (cellular vehicle-to-everything, C-V2X)

The C-V2X is a V2X communication technology developed based on a cellular system. The C-V2X uses and enhances a function and an element of a current cellular network to implement low-delay and high-reliability communication, including vehicle to vehicle (vehicle to vehicle, V2V) communication, vehicle to pedestrian (vehicle to pedestrian, V2P) communication, vehicle to infrastructure (vehicle to infrastructure, V2I) communication, and vehicle to network (vehicle to network, V2N) communication, between various nodes in a vehicle network. With evolution of the cellular system from 4G long term evolution (long term evolution, LTE) to 5G, the C-V2X evolves from LTE-V2X to NR-V2X (new radio V2X, NR-V2X).

2. Sidelink (sidelink, SL)

The SL is defined for direct communication between terminal devices. To be specific, the SL is a link on which the terminal devices directly communicate with each other without forwarding by a base station.

3. Sidelink control information (sidelink control information, SCI)

The SCI includes first-stage SCI (first-stage SCI) carried on a physical sidelink control channel (physical sidelink control channel, PSCCH) and second-stage SCI (second-stage SCI) carried on a physical sidelink shared channel (physical sidelink shared channel, PSSCH).

4. Quasi co-location (quasi co-location, QCL) relationship

Before a definition of the QCL is provided, an antenna port (antenna port) needs to be explained first. The antenna port is a logical concept widely used in the 3GPP protocol, and is defined as follows: A channel through which a signal on an antenna port passes may be derived from a channel through which another signal whose transmission is performed on the same antenna port passes. It should be noted that the antenna port is different from an actually used physical antenna. A plurality of physical antennas may correspond to a same antenna port, and one physical antenna may correspond to a plurality of antenna ports.

Based on the antenna port, the QCL is defined as follows: If a channel feature experienced by a signal on an antenna port may be derived from a channel through which a signal on another antenna port passes, it is considered that the two antenna ports are QCL. In addition, there is also a QCL relationship between reference signals (reference signals, RSs) whose transmission is performed on the two antenna ports.

5. Transmission configuration indication (transmission configuration indication, TCI)

In NR, a TCI indicates a QCL relationship between two RSs, that is, a QCL relationship between antenna ports corresponding to the two RSs. Specifically, it is assumed that the two RSs are a first RS and a second RS, and a gNB configures a TCI state (TCI-State) for the first RS by using radio resource control (radio resource control, RRC) signaling. A UE side may determine, by using the TCI state, the second RS that has the QCL relationship with the first RS based on a QCL type (qcl-Type). The second RS may be a channel state information reference signal (channel state information reference signal, CSI-RS) or a synchronization signal block (synchronization signal block, SSB).

For signals from different TRPs, panels, or beams, after different TCI states are configured for these signals, the UE may determine which TRP, panel, or beam the signal is from, and may also determine which signals are from a same TRP, panel, or beam.

In a Uu interface, the gNB configures a plurality of TCI states for the UE by using RRC signaling, and then indicates a TCI state of an RS by using a medium access control (medium access control) control element (control element, CE) and/or downlink control information (downlink control information, DCI). For example, content of the TCI-State is as follows:

```
TCI-state ::=            SEQUENCE {
    tci-stateId              TCI-StateId,
    qcl-Type1                QCL-Info,
    qcl-Type2                QCL-Info
    ...
    }
QCL-Info ::=            SEQUENCE{
    cell                     servcellIndex
    bwp-Id                   BWP-Id
    referenceSignal          CHOICE {
    csi-rs                       NZP-CSI-RS-ResourceId,
  ssb                            SSB-Index
    },
    qcl-Type             ENUMERATED {typeA, typeB, typec, typeD},
    ...
    }
```

The foregoing information elements (information elements, IEs) are explained as follows:

1. tci-stateId: indicates a TCI state identifier (identification, ID).
2. qcl-Type1: indicates a QCL relationship and a corresponding RS. The qcl-Type1 further corresponds to a QCL-Info information element, and the QCL-Info information element indicates a specific parameter of the QCL type.
3. qcl-Type2: is an optional information element, indicates another QCL relationship and a corresponding RS. The qcl-Type2 further corresponds to a QCL-Info information element, and the QCL-Info information element indicates a specific parameter of the QCL type.

The QCL-Info information element further includes two mandatory information elements, and the two mandatory information elements are explained as follows:

1. referenceSignal: indicates an RS corresponding to a QCL relationship, and may be a CSI-RS resource with a specific ID or an SSB with a specific index (index). It should be noted that, in a conventional technology, a CSI-RS is represented as a CSI-RS resource. One CSI-RS resource corresponds to one CSI-RS configuration. Configuration parameters include a resource ID, a resource mapping, and the like, where the resource mapping parameter further includes a port quantity, a frequency domain position, a time domain position, and the like.
2. qcl-Type: indicates a QCL type corresponding to a QCL relationship, and may be one of {typeA, typeB, typeC, typeD}.

A single QCL type corresponds to a combination of one or more channel features, and a possible channel feature includes a Doppler frequency shift, a Doppler spread, an average delay, a delay spread, and a spatial reception parameter. A channel feature combination corresponding to each QCL type is briefly described as follows: the typeA: {Doppler frequency shift, Doppler spread, average delay, delay spread}; the typeB: {Doppler frequency shift, Doppler spread}; the typeC: {Doppler frequency shift, average delay}; and the typeD: {spatial reception parameter}. When there is a QCL relationship between two antenna ports based on a QCL type, it is considered that channels through which signals on the two antenna ports pass are the same as a channel feature corresponding to the QCL type. The typeD is used as an example. The QCL type corresponds to only the spatial reception parameter. Therefore, when there is a QCL relationship between the two antenna ports based on the typeD, it is considered that channels through which the signals on the two antenna ports pass have a same spatial reception parameter.

6. Beam

The beam (beam) and a beam pair (beam pair link, BPL) are introduced into a communication system. The beam is a communication resource. Beams may be classified into a transmit beam and a receive beam. A technology for forming the beam may be a beamforming technology or another technology means. Beamforming includes transmit beamforming and receive beamforming.

Transmit beam: is a beam that has a spatial directivity and that is formed by a signal sent by a transmitter device by using a specific beamforming weight. In an uplink direction, the transmitter device may be a terminal. In a downlink direction, the transmitter device may be a network device.

Receive beam: is a beam that has a spatial directivity and that is formed by a signal received by a receiver device by using a specific beamforming weight. In an uplink direction, the receiver device may be a network device. In a downlink direction, the receiver device may be a terminal.

Transmit beamforming: When a transmitter device with an antenna array sends a signal, a specific amplitude and phase are set on each antenna element of the antenna array, so that the sent signal has specific spatial directivity. In other words, the sent signal has high signal power in some directions, and has low signal power in some other directions. A direction with highest signal power is a direction of a transmit beam. The antenna array includes a plurality of antenna elements. The additional specific amplitude and phase are a beamforming weight.

Receive beamforming: When a receiver device with an antenna array receives a signal, a specific amplitude and phase are set on each antenna element of the antenna array, so that a power gain of the received signal is directional. In other words, the power gain is high when the signal is received in some directions, and the power gain is low when the signal is received in some other directions. A direction with a highest power gain when the signal is received is a direction of a receive beam. The antenna array includes a plurality of antenna elements. The additional specific amplitude and phase are a beamforming weight.

Sending a signal by using a transmit beam: sending the signal by using a beamforming weight.

Receiving a signal by using a receive beam: receiving the signal by using a beamforming weight.

Different beams may be considered as different resources. Same information or different information may be sent by using (based on) different beams. The beam pair is established based on a concept of the beam. One beam pair usually includes one transmit beam of a transmitter device and one receive beam of a receiver device. It should be noted that, unless otherwise specified, a transmit beam in the following is a transmit beam of a network device, and a receive beam in the following is a receive beam of a terminal.

In a communication system, for example, a 5G new radio (new radio, NR) system, both a network device and a terminal may generate one or more transmit beams and one or more receive beams. Before data transmission is performed, beam alignment needs to be performed.

It should be understood that the technical solutions in embodiments of this application may be applied to a system in which a terminal device directly communicates with a terminal device, for example, V2X and D2D, including scenarios such as relay (relay) and cooperation (cooperation) between the terminal devices, and are applicable to communication scenarios with and without network coverage, and a mode in which a user autonomously selects a resource.

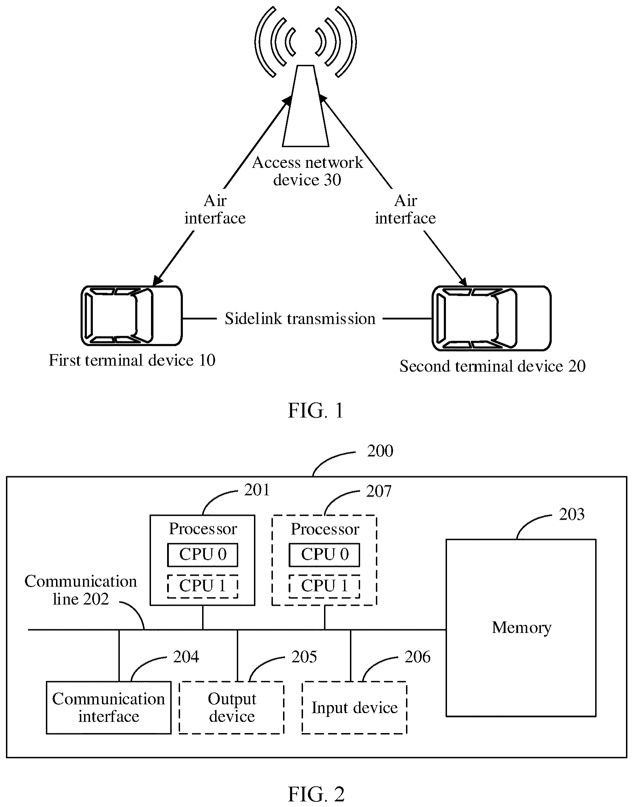

The following describes a basic architecture of a communication system provided in embodiments of this application. FIG. 1 is a diagram of an architecture of a communication system according to an embodiment of this application. As shown in FIG. 1, the communication system may include a first terminal device 10 and a second terminal device 20 that performs SL communication with the first terminal device 10. FIG. 1 is merely a diagram, and does not constitute a limitation on an applicable scenario of the technical solutions provided in this application.

The first terminal device 10 and the second terminal device 20 are user-side entities configured to receive a signal, send a signal, or receive and send a signal. The first terminal device 10 and the second terminal device 20 are configured to provide one or more of a voice service and a data connectivity service for a user. The first terminal device 10 and the second terminal device 20 may be devices that include a wireless transceiver function and that can work together with an access network device to provide a communication service for the user. Specifically, the first terminal device 10 and the second terminal device 20 may refer to user equipments (user equipments, UEs), access terminals, subscriber units, subscriber stations, mobile stations, remote stations, remote terminals, mobile devices, terminals, wireless communication devices, user agents, user apparatuses, or road side units (road side units, RSUs). The first terminal device 10 and the second terminal device 20 may alternatively be uncrewed aerial vehicles, internet of things (internet of things, IoT) devices, stations (stations, STs) in a WLAN, cellular phones (cellular phones), smartphones (smart phones), cordless phones, wireless data cards, tablet computers, session initiation protocol (session initiation protocol, SIP) phones, wireless local loop (wireless local loop, WLL) stations, personal digital assistant (personal digital assistant, PDA) devices, laptop computers (laptop computers), machine-type communication (machine-type communication, MTC) terminals, handheld devices with a wireless communication function, computing devices or other processing devices connected to a wireless modem, vehicle-mounted devices, wearable devices (also referred to as wearable intelligent devices), virtual reality (virtual reality, VR) terminals, augmented reality (augmented reality, AR) terminals, wireless terminals in industrial control (industrial control), wireless terminals in self driving (self driving), wireless terminals in telemedicine (remote medical), wireless terminals in a smart grid (smart grid), wireless terminals in transportation safety (transportation safety), wireless terminals in a smart city (smart city), wireless terminals in a smart home (smart home), or the like. The first terminal device 10 and the second terminal device 20 may alternatively be device-to-device (device-to-device, D2D) devices, for example, electric meters and water meters. The first terminal device 10 and the second terminal device 20 may alternatively be terminals in a 5G system, or terminals in a next-generation communication system. This is not limited in this embodiment of this application.

It may be understood that the first terminal device 10 may further perform SL communication with a terminal device other than the second terminal device 20, and the second terminal device 20 may further perform SL communication with a terminal device other than the first terminal device 10. This is not limited herein.

The communication system may further include one or more access network devices 30 (only one is shown). In this application, the first terminal device 10 and the second terminal device 20 may be located within coverage of a same access network device; the first terminal device 10 and the second terminal device 20 may be located within coverage of different access network devices; the first terminal device 10 is located within coverage of an access network device, and the second terminal device 20 is located out of the coverage (out of coverage) of the access network device; the first terminal device 10 is located out of coverage of an access network device, and the second terminal device 20 is located within the coverage of the access network device, or both the first terminal device 10 and the second terminal device 20 are located out of coverage of the access network device. This is not limited herein.

The access network device 30 is a network-side entity configured to send a signal, receive a signal, or send and receive a signal. The access network device 30 may be an apparatus that is deployed in a radio access network (radio access network, RAN) and that provides a wireless communication function for the first terminal device 10 and the second terminal device 20, for example, may be a transmission reception point (transmission reception point, TRP), a base station, or a control node in various forms, for example, a network controller, a radio controller, or a radio controller in a cloud radio access network (cloud radio access network, CRAN) scenario. Specifically, the access network device may be a macro base station, a micro base station (also referred to as a small cell), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, or the like in various forms, or may be an antenna panel of the base station. The control node may be connected to a plurality of base stations, and configure resources for a plurality of terminals covered by the plurality of base stations. A device with a base station function may have different names in systems using different radio access technologies. For example, the access network device 30 may be an evolved NodeB (evolved NodeB, eNB or eNodeB) in an LTE system, may be the radio controller in the cloud radio access network (cloud radio access network, CRAN) scenario, or may be a gNB in 5G. Alternatively, the access network device 30 may be a relay station, an access point, a vehicle-mounted device, a wearable device, a network-side device in a post-5G network, an access network device in a future evolved PLMN network, or the like. A specific name of the access network device is not limited in this application.

It should be noted that the technical solutions provided in embodiments of this application are applicable to a plurality of system architectures. The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Optionally, each device (for example, the first terminal device 10, the second terminal device 20, or the access network device 30) in FIG. 1 may be implemented by one device, may be jointly implemented by a plurality of devices, or may be one functional module in one device. This is not specifically limited in this embodiment of this application. It may be understood that the foregoing function may be a network element in a hardware device, may be a software function running on dedicated hardware, or may be a virtualization function instantiated on a platform (for example, a cloud platform).

For example, each device in FIG. 1 may be implemented by using a communication apparatus 200 in FIG. 2. FIG. 2 is a diagram of a hardware structure of a communication apparatus applicable to an embodiment of this application. The communication apparatus 200 includes at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions of this application.

The communication line 202 may include a path on which information is transferred between the foregoing components.

The communication interface 204 is an apparatus (like an antenna) like any transceiver, and is configured to communicate with another device or a communication network, like the Ethernet, a RAN, or a wireless local area network (wireless local area network, WLAN).

The memory 203 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, an optical disk storage (including a compact optical disc, a laser disc, an optical disc, a digital versatile optical disc, a Blu-ray disc, and the like), a magnetic disk storage medium or another magnetic storage device, or any other medium capable of carrying or storing desired program code in a form of instructions or a data structure and capable of being accessed by a computer, but is not limited thereto. The memory may exist independently, and is connected to the processor through the communication line 202. The memory may alternatively be integrated with the processor. The memory provided in embodiments of this application may be usually non-volatile.

The memory 203 is configured to store computer-executable instructions for executing the solutions of this application, and the processor 201 controls the execution. The processor 201 is configured to execute the computer-executable instructions stored in the memory 203, to implement the method provided in the following embodiments of this application.

Optionally, the computer-executable instructions in this embodiment of this application may also be referred to as application program code. This is not specifically limited in this embodiment of this application.

In a possible implementation, the processor 201 may include one or more CPUs, for example, a CPU 0 and a CPU 1 in FIG. 2.

In a possible implementation, the communication apparatus 200 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, a projector (projector), or the like. The input device 206 communicates with the processor 201, and may receive an input from a user in a plurality of manners. For example, the input device 206 may be a mouse, a keyboard, a touchscreen device, a sensor device, or the like.

The foregoing communication apparatus 200 may be a general-purpose device or a special-purpose device. During specific implementation, the communication apparatus 200 may be a desktop computer, a portable computer, a network server, a palmtop computer (personal digital assistant, PDA), a mobile phone, a tablet computer, a wireless terminal device, an embedded device, or a device having a structure similar to that in FIG. 2. A type of the communication apparatus 200 is not limited in this embodiment of this application.

It should be understood that, for a terminal device, when a beam used by the terminal device to communicate with a peer device is used for sending, the beam may be understood as a transmit beam of the terminal device. When a beam used by the terminal device to communicate with the peer device is used for receiving, the beam may be understood as a receive beam of the terminal device. In other words, for a terminal device, a beam used by the terminal device to communicate with a peer device may be used for sending a signal to the peer device, or may be used for receiving a signal sent by the peer device. In this embodiment of this application, a transmit beam of a terminal device may also be represented by using a reference signal. That is, there is a correspondence between the transmit beam and the reference signal. For example, in this embodiment of this application, a first beam of the second terminal device may also be described as a first reference signal, where the first reference signal is a reference signal sent by using the first beam.

The following describes in detail the communication method and the communication apparatus provided in this application.

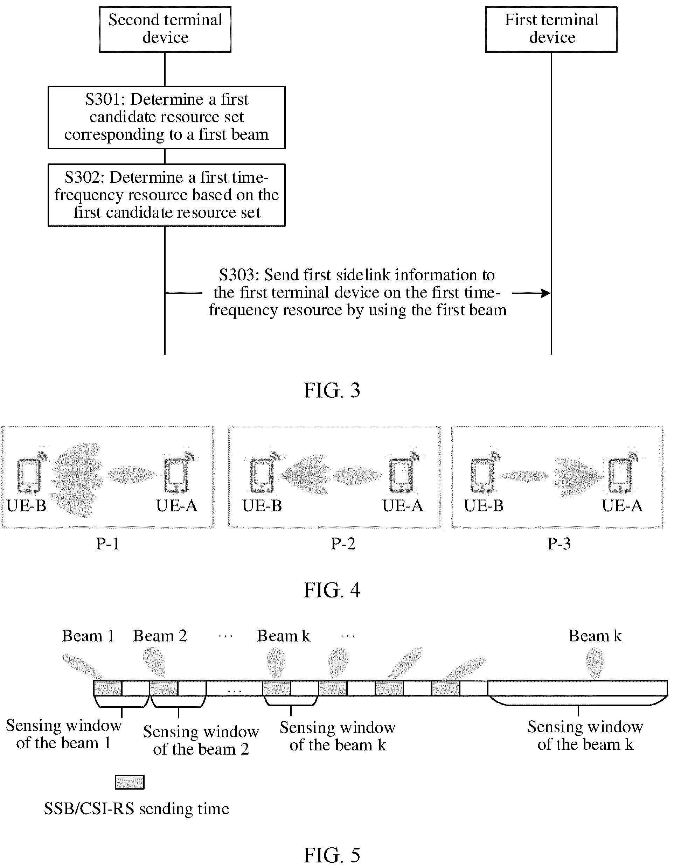

FIG. 3 is an interaction diagram of a communication method according to an embodiment of this application. A first terminal device in FIG. 3 is the first terminal device 10 in FIG. 1, and a second terminal device in FIG. 3 is the second terminal device 20 in FIG. 1. As shown in FIG. 3, the communication method includes the following steps S301 to S303. The method shown in FIG. 3 may be executed by the first terminal device and the second terminal device, or the method shown in FIG. 3 may be executed by a chip in the first terminal device and a chip in the second terminal device. It should be noted that FIG. 3 is a schematic flowchart of a method embodiment of this application, and shows detailed communication steps or operations of the method. However, these steps or operations are merely examples. Variants of various operations in FIG. 3 or other operations may be further performed in embodiments of this application. In addition, the steps in FIG. 3 may be separately performed in a sequence different from that shown in FIG. 3, and possibly, not all the operations in FIG. 3 need to be performed. An example in which the method is performed by the first terminal device and the second terminal device is mainly used for description in FIG. 3.

S301: The second terminal device determines a first candidate resource set corresponding to a first beam.

The first beam is any beam in a beam set, and the beam set includes a plurality of beams (that is, two or more beams). The beam set herein may be specifically understood as a transmit beam set of the second terminal device. In other words, the second terminal device may determine a candidate resource set corresponding to each beam included in the transmit beam set of the second terminal device. For ease of description, in this embodiment of this application, the first beam in the beam set is mainly used as an example for description, and a candidate resource set corresponding to the first beam is the first candidate resource set.

In an implementation, the first terminal device (namely, a receiver) may determine the first candidate resource set corresponding to the first beam, and send first indication information to the second terminal device (namely, a transmitter). Correspondingly, the second terminal device receives the first indication information from the first terminal device, where the first indication information indicates the first beam and the first candidate resource set corresponding to the first beam. In other words, the first terminal device (namely, the receiver) may determine and send, to the second terminal device (namely, the transmitter), indication information (namely, the first indication information) of the first candidate resource set corresponding to the first beam, so that the second terminal device obtains the first candidate resource set corresponding to the first beam. Optionally, to avoid a sending conflict and a half-duplex problem, retransmission of the first indication information usually needs to be performed for a plurality of times. It should be understood that the transmitter and the receiver in this embodiment of this application are defined relative to sending and receiving of sidelink information. To be specific, a terminal device configured to send the sidelink information is the transmitter, and a terminal device configured to receive the sidelink information is the receiver.

For example, that the first terminal device determines the first candidate resource set corresponding to the first beam may be understood as follows: The first terminal device receives second indication information from at least one terminal device in a sensing window of a third beam by using the third beam, where the at least one terminal device includes the second terminal device, and second indication information of any one of the at least one terminal device includes a time-frequency resource of (reserved by) the any terminal device. Further, the first terminal device may determine, in a selection window of the third beam based on a time-frequency resource of the at least one terminal device, the first candidate resource set corresponding to the first beam. It should be understood that, in this embodiment of this application, the first beam is a transmit beam of the second terminal device, and the third beam is a receive beam that is of the first terminal device and that corresponds to the transmit beam of the second terminal device. That is, the first beam matches the third beam.

It should be understood that the first indication information may specifically include a correspondence between the first beam and the first candidate resource set, and the first candidate resource set. The correspondence between the first beam and the first candidate resource set may be indicated by using a first SL TCI state identifier of a first reference signal. In other words, the first SL TCI state identifier may indicate a channel feature of the transmitted first reference signal and/or the transmitted first candidate resource set. The channel feature herein includes a spatial reception parameter. It should be understood that the first SL TCI state identifier may be carried in SCI and/or a MAC CE.

Specifically, two possible manners are included:

1. The receiver UE indicates a TCI state of a reference signal of the receiver UE, to be specific, notifies, by indicating the receive beam of the receiver UE, the transmitter UE of the first beam corresponding to the first candidate resource set (the transmitter UE knows a correspondence between a transmit beam and the receive beam).
2. The receiver UE indicates a TCI state of a reference signal of the transmitter UE, to be specific, notifies, by indicating the transmit beam of the transmitter UE, the transmitter UE of the first beam corresponding to the first candidate resource set.

For example, in Manner 1, the first terminal device predefines, configures, or preconfigures $N_{TCI}$ SL TCI state identifiers, where $N_{TCI}$ is a positive integer greater than or equal to 1, and each SL TCI state identifier indicates a corresponding reference signal. For example, an SL TCI state identifier of an SL-SSB whose index (index) is 0 is 0, an SL TCI state identifier of an SL-SSB whose index is 1 is 1, and an SL TCI state identifier of an SL-CSI-RS whose identifier is 1 is 2. The first indication information sent by the first terminal device includes an SL TCI state identifier and the first candidate resource set. To be specific, the first terminal device sends the SL TCI state identifier 1 in the SCI and/or the MAC CE, and sends the first candidate resource set in the MAC CE. In this case, the second terminal device may consider that a spatial reception parameter experienced by the first candidate resource set and a spatial reception parameter experienced by the SL-SSB whose index is 1 are the same. If the spatial reception parameters are the same, it may be considered that the first candidate resource set and the SL-SSB whose index is 1 are sent by using a same beam. The second terminal device needs to select a resource from the first candidate resource set and perform transmission by using a transmit beam that matches a beam corresponding to the SL-SSB whose index is 1.

In another example, in Manner 2, the first terminal device predefines, configures, or preconfigures $N_{TCI}$ SL TCI state identifiers, where $N_{TCI}$ is a positive integer greater than or equal to 1, and each SL TCI state identifier indicates a reference signal corresponding to the second terminal device. For example, an SL TCI state identifier of an SL-SSB whose index (index) is 0 is 0, an SL TCI state identifier of an SL-SSB whose index is 1 is 1, and an SL TCI state identifier of an SL-CSI-RS whose identifier is 1 is 2. The first indication information sent by the first terminal device includes an SL TCI state identifier and the first candidate resource set. To be specific, the first terminal device sends the SL TCI state identifier 1 in the SCI and/or the MAC CE, and sends the first candidate resource set in the MAC CE. In this case, the second terminal device may consider that a spatial reception parameter experienced by the first candidate resource set and a spatial reception parameter experienced by the SL-SSB whose index is 1 are the same. It should be understood that, if the spatial reception parameters are the same, it may be considered that the first candidate resource set and the SL-SSB whose index is 1 are sent by using a same beam. Therefore, the second terminal device needs to select a resource from the first candidate resource set and perform transmission by using a transmit beam corresponding to the SL-SSB whose index is 1.

It should be understood that, for content of the SL TCI state, refer to the example in the foregoing explanation for the communication term "5". Optionally, the content of the SL TCI state may be simplified or supplemented as compared with the example in the explanation for the communication term "5". This is not limited herein.

Optionally, the first indication information may alternatively include the first beam and a first conflict resource set corresponding to the first beam. Therefore, after receiving the first conflict resource set corresponding to the first beam from the first terminal device, the second terminal device may determine, with reference to the first conflict resource set corresponding to the first beam, the first candidate resource set corresponding to the first beam. It should be understood that a time-frequency resource included in the conflict resource set may be understood as an unavailable resource, and a time-frequency resource included in a candidate resource set may be understood as an available resource.

In another implementation, the second terminal device may alternatively determine the first candidate resource set corresponding to the first beam. Specifically, the second terminal device receives second indication information from another terminal device in a sensing window of the first beam by using the first beam, and determines, in a selection window of the first beam based on a time-frequency resource indicated by the second indication information of the another terminal device, the first candidate resource set corresponding to the first beam.

For example, it is assumed that the first terminal device is a UE-A, and the second terminal device is a UE-B. A beam sweeping process of an SL system may be divided into three states. For example, FIG. 4 is a diagram of the beam sweeping process according to an embodiment of this application. As shown in FIG. 4, operations for each state are summarized as follows:

P-1: The UE-A measures a transmit beam set of the UE-B, and selects a transmit beam of the UE-B and a receive beam of the UE-A.

P-2: Based on P-1, the UE-B performs measurement by using a transmit beam set of a finer granularity, to improve the transmit beam (namely, a first beam) of the UE-B.

P-3: The UE-A measures the same transmit beam of the UE-B by using different receive beams, to improve the receive beam (namely, a third beam) of the UE-A.

It should be understood that, in the foregoing beam sweeping process, sweeping time in each beam direction is defined as a sensing window of a beam in this embodiment of this application. For example, FIG. 5 is a diagram of a sensing window according to an embodiment of this application. As shown in FIG. 5, in a beam sweeping process, a sensing window of each beam includes an SSB or CSI-RS sending and/or receiving time of the beam in a corresponding direction. If it is determined, after the beam sweeping process ends, that a beam k is a beam for communicating with a peer end, when the beam k is subsequently used for receiving/sending sidelink information, corresponding time for sweeping is a sensing window of the beam k. A specific time location like a sending periodicity and a pattern (an SSB or CSI-RS sending time in a beam direction) of a specific beam of the SSB or a CSI-RS is not limited in this application. For ease of description, in this embodiment of this application, a beam determined by the UE-A after the beam sweeping process ends may be referred to as a beam $k_A$, and a beam determined by the UE-B after the beam sweeping process ends may be referred to as a beam $k_B$. In other words, the beam $k_A$ and the beam $k_B$ are a receive and transmit beam pair, or the beam $k_A$ matches the beam $k_B$.

It should be noted that, when the UE-B performs beam sweeping with the beam $k_B$, resource sensing is also performed at the same time when the UE-B receives/sends an SSB or a CSI-RS. Therefore, a candidate resource set in each beam direction may be determined based on a sensing result when the UE-B performs beam sweeping. Optionally, when the UE-A performs beam sweeping with the beam $k_A$, resource sensing is also performed at the same time when the UE-A receives/sends an SSB or a CSI-RS. Therefore, a candidate resource set in each beam direction may be determined based on a sensing result when the UE-A performs beam sweeping.

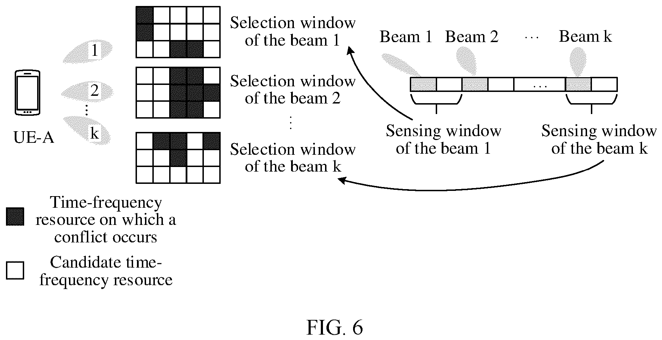

For example, FIG. 6 is a diagram of a scenario of determining a candidate resource set according to an embodiment of this application. As shown in FIG. 6, it is assumed that a UE-A is a transmitter of sidelink information, and a UE-B is a receiver of the sidelink information. When the UE-A performs beam sweeping in beam directions 1, 2, ..., and k, resource sensing is also performed at the same time when the UE-A receives/sends an SSB or a CSI-RS. Therefore, a candidate resource set in each beam direction may be determined based on a sensing result when the UE-A performs beam sweeping.

For example, a first beam is a beam $k_A$, and a procedure in which the UE-A performs resource sensing and resource selection to determine a candidate resource set of the beam $k_A$ is as follows:

Step 1: Determine a candidate resource $R_{x,y}$ in units of one slot and consecutive $L_{subCH}$ sub-channels, and a selection window is $[n + T_a, n + T_b]$, where selection of $T_a$ is up to implementation. If $T_{2min}$ (configured at a higher layer) is shorter than a remaining *PDB* (packet delay budget), selection of $T_b$ is up to implementation subject to $T_{2min} \leq T_b \leq PDB$ (packet delay budget); or if $T_{2min}$ (configured at a higher layer) is longer than or equal to a remaining *PDB* (packet delay budget), $T_b$ is equal to the remaining *PDB*.

Step 2: Determine a sensing window $\left[n - T_0, n - T_{proc,0}^{SL}\right) \cup \left[n - T_{xk}, n - T_{yk}\right]$ , where $T_{xk}$ and $T_{yk}$ are respectively a set of a plurality of start time points for sending/receiving of the beam $k_A$ and a set of a plurality of end time points for sending/receiving of the beam $k_A$, that is, time in which the UE uses the beam $k_A$ in a window $\left[n - T_0, n - T_{proc,0}^{SL}\right)$ .

Step 3: Determine a reference signal received power (reference signal received power, RSRP) threshold $Th(p_i, p_j)$, where the RSRP threshold is related to $prio_{TX}$ of to-be-sent data and a data priority $prio_{RX}$ indicated by received SCI, and $Th(p_i, p_j)$ is specifically an $(prio_{RX}+(prio_{TX}-1)*8)^{th}$ threshold in an RSRP threshold set configured in a resource pool.

Step 4: Initialize the first candidate resource set $S_A$ corresponding to the first beam, where the first candidate resource set $S_A$ includes all time-frequency resources in the selection window.

Step 5a: Exclude, from $S_A$, the following time-frequency resources: slots reserved for all periodic resources configured in a resource pool corresponding to a slot (a slot for sending or a slot in which another beam is used) in which no sensing is performed and that is in the sensing window.

Step 5b: If the time-frequency resources excluded from $S_A$ are fewer than X% of total resources in the selection window, perform initialization in step 4 again.

Step 6: Continue to exclude the following time-frequency resources from $S_A$: Received first-stage SCI is successfully decoded, a result of RSRP measurement performed on a PSSCH demodulation reference signal (demodulation reference signal, DMRS) or a PSCCH DMRS of a time-frequency resource on which the received first-stage SCI is located is greater than the RSRP threshold determined in step 3, and a time-frequency resource reserved for the received first-stage SCI is in the selection window, including a retransmission resource indicated by the first-stage SCI and a periodically reserved resource.

Step 7: If remaining resources in $S_A$ are fewer than X% of the total resources in the selection window, and a value of X% is configured in the resource pool and is related to $prio_{TX}$, increase the RSRP threshold determined in step 3 (for example, increase the RSRP threshold by 3 dB each time), continue to perform step 4, and report $S_A$ to the higher layer (MAC layer) until the remaining resources in $S_A$ are not fewer than X% of the total resources in the selection window.

S302: The second terminal device determines a first time-frequency resource based on the first candidate resource set.

In some feasible implementations, the second terminal device may determine the first time-frequency resource based on the first candidate resource set. For example, in an implementation, the second terminal device may specifically determine the first time-frequency resource from the first candidate resource set.

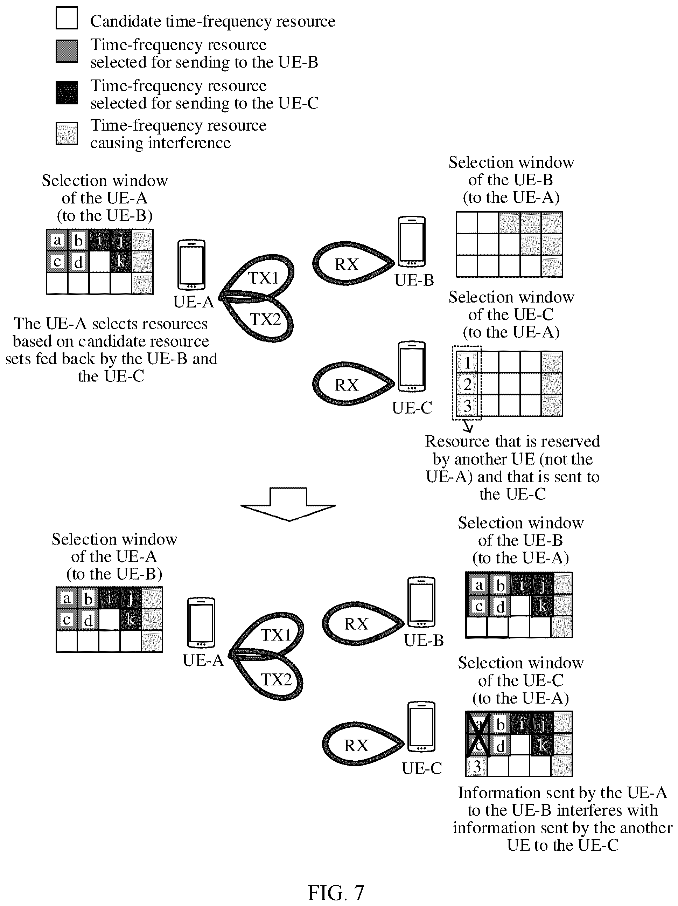

Optionally, in another implementation, because a beam is directional, and information receiving and sending between adjacent beams may affect each other, a result of sensing and resource selection of a neighboring beam needs to be considered during directional resource sensing, to avoid generation of additional interference. For example, FIG. 7 is a diagram of a scenario of interference between adjacent beams according to an embodiment of this application. A UE-A selects corresponding sending time-frequency resources based on candidate resource sets fed back by a UE-B and a UE-C, and sends information to the UE-B (on resources a, b, c, and d) and the UE-C (on resources i, j, and k) by using transmit beams TX1 and TX2. In this case, because the TX1 and the TX2 are adjacent, the UE-C may receive the information sent by the UE-A to the UE-B by using the TX1 and the information sent by the UE-A to the UE-C by using the TX2 at the same time. Because the time-frequency resource of the information sent by the UE-A to the UE-B by using the TX1 is determined based on the candidate resource set fed back by the UE-B, interference may be caused when the information sent by the UE-A to the UE-B is received by the UE-C. As shown in FIG. 7, the UE-C receives the information sent by the UE-A to the UE-B (on the resources a, b, c, and d), and there is a conflict between the information and resources (resources 1, 2, and 3) that have been excluded by the UE-C (between the resources 1 and 2 and the resources a and b). If these excluded resources are resources that another UE indicates to send to the UE-C, the resource selected by the UE-A in the TX1 may cause interference to the UE-C.

It can be learned from the foregoing analysis that, in a scenario in which a neighboring beam (for example, a second beam) of the first beam exists, when the second terminal device determines the first time-frequency resource based on the first candidate resource set, the second terminal device needs to determine the first time-frequency resource based on an intersection set of the first candidate resource set and a second candidate resource set. It should be understood that the second candidate resource set is a candidate resource set corresponding to the second beam, and the second beam is a neighboring beam of the first beam.

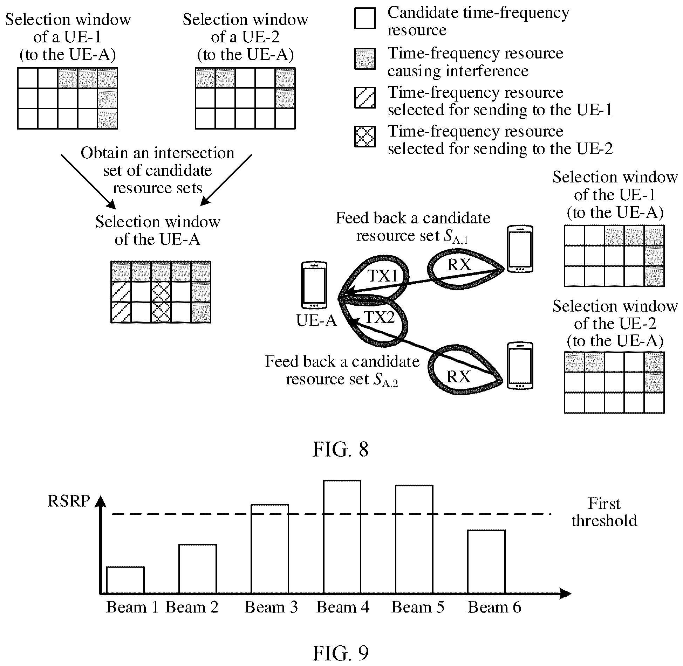

For example, FIG. 8 is a diagram of a scenario of determining a candidate resource set in a scenario of adjacent beams according to an embodiment of this application. As shown in FIG. 8, after a UE-A and a UE-1 determine an optimal transmit beam TX1 and a receive beam of the UE-1 through a beam sweeping process, the UE-1 may determine a candidate resource set $S_{A,1}$ according to the foregoing steps 1 to 8, and send the candidate resource set $S_{A,1}$ to the UE-A, where the candidate resource set $S_{A,1}$ may be carried by a MAC CE. Similarly, after the UE-A and a UE-2 determine an optimal transmit beam TX2 and a receive beam of the UE-2, the UE-2 may feed back a candidate resource set $S_{A,2}$ to the UE-A. If the beam TX1 and the beam TX2 of the UE-A are adjacent/similar to each other, transmission of the two beams may affect each other. Therefore, the UE-A may determine a new candidate resource set based on the candidate resource set $S_{A,1}$ and $S_{A,2}$, and select a first time-frequency resource from the new candidate resource set. Specifically, because an available resource in the candidate resource set $S_{A,1}$ cannot be an unavailable resource in the candidate resource set $S_{A,2}$, and an available resource in the candidate resource set $S_{A,2}$ cannot be an unavailable resource in the candidate resource set $S_{A,1}$, the new candidate resource set $S_A$ is an intersection set of the $S_{A,1}$ and the $S_{A,2}$. It should be understood that, the UE-A may select, from the new candidate resource set $S_A$, time-frequency resources for sending to the UE-1 and the UE-2.

It should be understood that a manner of determining adjacent beams or similar beams may include one or more of the following:

1. That the first beam and the second beam are adjacent beams is predefined, configured, or preconfigured. It may be understood that "predefined" may be understood as "defined in a standard", configuration by another device does not need to be performed (and change by a network device or another terminal device cannot be performed), and information is recorded/written in advance in hardware and/or software of a terminal device. "Configured" is classified into configuration by the network device and configuration by the terminal device. If the configuration is performed by the network device, the configuration may be changed by using a SIB or RRC signaling. If the configuration is performed by the terminal device, the configuration may be changed based on PC5-RRC signaling. "Preconfigured" may be understood as that information is recorded/written in advance in hardware and/or software of the UE, and the information is determined by a factory device vendor, and may be changed by using the software or hardware.

2. An included angle between a main lobe direction of the first beam and a main lobe direction of the second beam is less than or equal to a preset angle. Herein, a main lobe direction of a beam may be understood as an angle corresponding to a maximum value of a radiation field of an antenna array.

3. A reference signal received power RSRP measurement result of the first beam and an RSRP measurement result of the second beam are greater than or equal to a first threshold. For example, FIG. 9 is a diagram of a scenario of determining adjacent beams according to an embodiment of this application. As shown in FIG. 9, during receive beam sweeping, if RSRPs of a beam 3, a beam 4, and a beam 5 are all higher than a specified first threshold (that is, RSRP results of the beam 4, the beam 3, and the beam 5 are similar), it is determined that the beam 3, the beam 4, and the beam 5 are adjacent.

4. An absolute value of a difference between the reference signal received power RSRP measurement result of the first beam and the RSRP measurement result of the second beam is less than or equal to a second threshold.

S303: The second terminal device sends first sidelink information to the first terminal device on the first time-frequency resource by using the first beam. Correspondingly, the first terminal device receives, on the first time-frequency resource by using a third beam, the first sidelink information from the second terminal device.

In some feasible implementations, the second terminal device sends the first sidelink information to the first terminal device on the first time-frequency resource by using the first beam. Correspondingly, the first terminal device receives, on the first time-frequency resource by using the third beam, the first sidelink information from the second terminal device. Herein, the third beam is a receive beam that matches the first beam.

Optionally, the first sidelink information may further include a second time-frequency resource, and the second time-frequency resource is included in the first candidate resource set.

Optionally, in some feasible implementations, the first terminal device may further receive third indication information from a third terminal device, where the third indication information includes a third time-frequency resource of (reserved by) the third terminal device. If the second time-frequency resource and the third time-frequency resource overlap, and a data priority of the third terminal device is higher than a data priority of the second terminal device, the first terminal device may send conflict indication information to the second terminal device, where the conflict indication information indicates that a conflict occurs on the second time-frequency resource. Optionally, if the second time-frequency resource and the third time-frequency resource overlap, and a device priority of the third terminal device is higher than a device priority of the second terminal device, the first terminal device may send the conflict indication information to the second terminal device. Correspondingly, the second terminal device receives the conflict indication information from the first terminal device. It should be understood that the conflict indication information may specifically include location information of an overlapping time-frequency resource of the second time-frequency resource and the third time-frequency resource, or the conflict indication information includes the second time-frequency resource. Optionally, the conflict indication information may further include information about the first beam associated with the second time-frequency resource. For example, the conflict indication information is carried in SCI or a MAC CE.

It should be understood that the second indication information and the third indication information described in this embodiment of this application may also be understood as resource reservation information, and the resource reservation information is used for reserving a time-frequency resource used for sending.

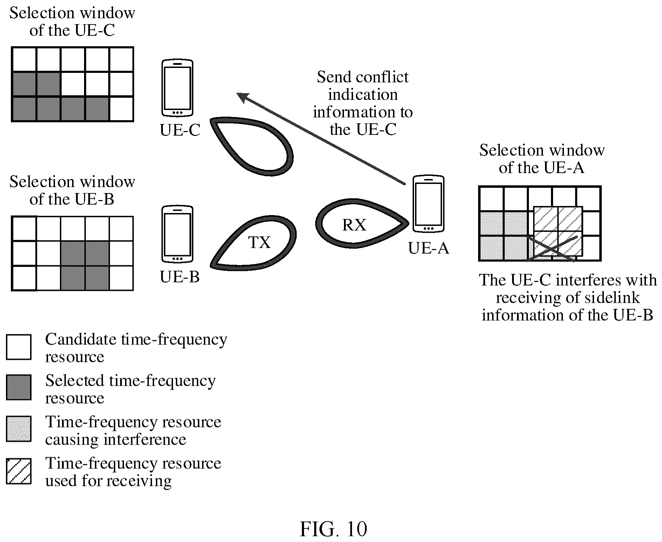

For example, FIG. 10 is a diagram of a scenario of sending conflict indication information according to an embodiment of this application. As shown in FIG. 10, a UE-A receives resource reservation information of a UE-B and a UE-C at the same time, the UE-A is a receiver of a resource reserved by the UE-B, and the UE-A is not a receiver of a resource reserved by the UE-C. In this case, because a beam is directional, the UE-B and the UE-C cannot detect each other's reservation information through sensing. Therefore, the UE-A needs to perform indication, to avoid a conflict. It should be understood that the resource reserved by the UE-B is a resource that the UE-A expects to receive, and the resource reserved by the UE-C is interference to the UE-A. Therefore, a possible conflict indication manner is as follows: If the conflict occurs between the resources reserved by the UE-B and the UE-C (that is, time-frequency resources overlap), where the resource reserved by the UE-B is the resource that the UE-A expects to receive, and the resource reserved by the UE-C is not a resource that the UE-A expects to receive, the UE-A may send the conflict indication information to the UE-C, where the conflict indication information may include a specific location of a time-frequency resource for sending a conflict, or information about the resource reserved by the UE-C, where the conflict indication information may be carried in SCI or a MAC CE. Optionally, another possible conflict indication manner is performing determining based on a data priority. For example, if a data priority of the UE-B is higher and the conflict occurs between the resources reserved by the UE-B and the UE-C, the UE-A sends the conflict indication information to the UE-C. Optionally, if a data priority of the UE-C is higher and the conflict occurs between the resources reserved by the UE-B and the UE-C, the UE-A sends the conflict indication information or retransmission information to the UE-B. Optionally, still another possible conflict indication manner is performing determining based on a device priority. For example, if a device priority of the UE-B is higher and the conflict occurs between the resources reserved by the UE-B and the UE-C, the UE-A sends the conflict indication information to the UE-C. Optionally, if a device priority of the UE-C is higher and the conflict occurs between the resources reserved by the UE-B and the UE-C, the UE-A sends the conflict indication information or retransmission information to the UE-B.

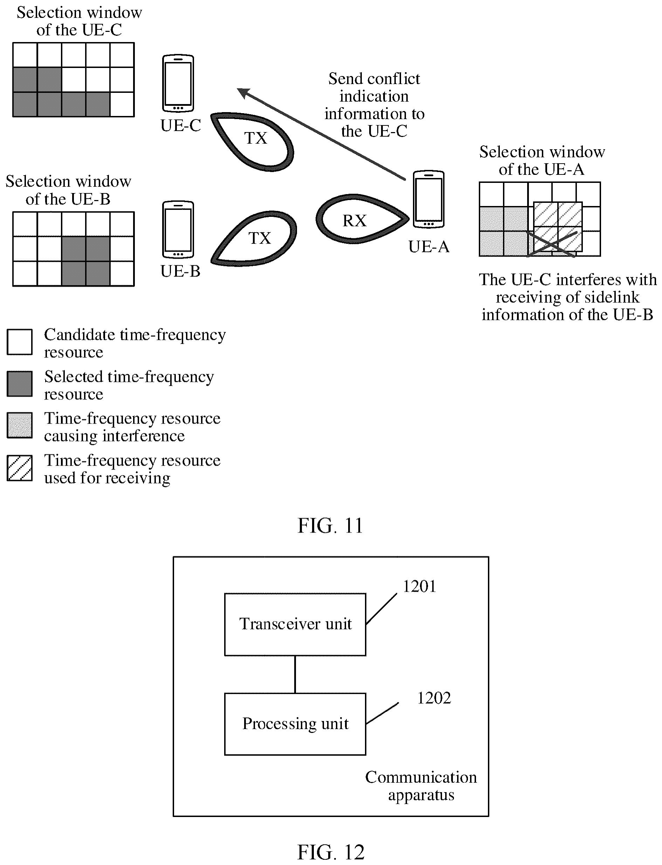

For another example, FIG. 11 is a diagram of another scenario of sending conflict indication information according to an embodiment of this application. As shown in FIG. 11, a UE-A receives resource reservation information of a UE-B and a UE-C at the same time, and the UE-A is a receiver of resources reserved by the UE-B and the UE-C. In this case, because a beam is directional, the UE-B and the UE-C cannot detect each other's reservation information through sensing. Therefore, the UE-A needs to perform indication, to avoid a conflict. It should be understood that, if the conflict occurs between the resources reserved by the UE-B and the UE-C (time-frequency resources overlap), the UE-A needs to select one of the UEs for receiving, and indicate the resource conflict to the other UE, where the conflict indication information may be a specific location of a time-frequency resource for sending a conflict, information about the reserved resource of the UE, or a retransmission indication, and the conflict indication information may be carried in SCI or a MAC CE. For example, in a possible conflict indication manner, the UE-A performs determining based on a data priority. If a data priority of the UE-B is higher and the conflict occurs between the resources reserved by the UE-B and the UE-C, the UE-A sends the conflict indication information to the UE-C. Optionally, if a data priority of the UE-C is higher and the conflict occurs between the resources reserved by the UE-B and the UE-C, the UE-A sends the conflict indication information to the UE-B. For another example, another possible conflict indication manner is that the UE-A performs determining based on a device priority. If a device priority of the UE-B is higher and the conflict occurs between the resources reserved by the UE-B and the UE-C, the UE-A sends the conflict indication information to the UE-C. Optionally, if a device priority of the UE-C is higher and the conflict occurs between the resources reserved by the UE-B and the UE-C, the UE-A sends the conflict indication information to the UE-B.

Optionally, in the foregoing conflict indication method, when the location of the resource on which the conflict occurs is indicated, corresponding beam information, that is, a TCI state of the resource on which the conflict occurs, may also be included. Similar to indicating the correspondence between the first beam and the first candidate resource set, $N_{TCI}$ SL TCI states are configured for the transmitter UE (namely, the second terminal device) and indicated to the receiver UE (namely, the first terminal device), or $N_{TCI}$ SL TCI states are configured in the resource pool, and the conflict indication information or configuration information needs to include the SL TCI state of the resource on which the conflict occurs.

In this embodiment of this application, a procedure that is of resource selection in FR2 and that is performed by the SL system is defined. An available candidate resource set is determined by using a beam as a unit, to prevent the transmitter UE (namely, the second terminal device) from selecting the resource on which the conflict occurs, thereby reducing the sending conflict. In addition, because the information receiving and sending between the adjacent beams may affect each other, the result of the sensing and resource selection of the adjacent beam needs to be considered during the directional resource sensing, to avoid the generation of the additional interference. Optionally, in this embodiment of this application, the conflict indication information is further defined. After receiving the conflict indication information from the receiver UE, the transmitter UE may not send the conflict indication information. This also helps avoid the conflict.

The following describes in detail communication apparatuses provided in this application with reference to FIG. 12 to FIG. 14. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the first terminal device or the second terminal device may be divided into functional modules based on the foregoing method examples. For example, each functional module may be obtained through division based on a corresponding function, or two or more functions may be integrated into one processing module. The foregoing integrated module may be implemented in a form of hardware, or may be implemented in a form of a software functional module. It should be noted that, in embodiments of this application, module division is an example, and is merely a logical function division. In actual implementation, another division manner may be used.

FIG. 12 is a diagram of a structure of a communication apparatus according to an embodiment of this application. The communication apparatus shown in FIG. 12 may be configured to perform some or all functions of the first terminal device in the method embodiment described in FIG. 3. The apparatus may be a first terminal device, an apparatus in the first terminal device, or an apparatus that can be used together with the first terminal device. The communication apparatus may alternatively be a chip or a chip system. The communication apparatus shown in FIG. 12 may include a transceiver unit 1201 and a processing unit 1202. The processing unit 1202 is configured to perform data processing. The transceiver unit 1201 is integrated with a receiving unit and a sending unit. The transceiver unit 1201 may also be referred to as a communication unit. Alternatively, the transceiver unit 1201 may be split into a receiving unit and a sending unit. Optionally, the transceiver unit 1201 may also have a function of obtaining information. This is similar for the following processing unit and transceiver unit, and details are not described below again. Specifically:

The processing unit 1202 is configured to determine a first candidate resource set corresponding to a first beam, where the first beam is any beam in a beam set, and the beam set includes a plurality of beams.

The transceiver unit 1201 is configured to send first indication information to a second terminal device, where the first indication information indicates the first beam and the first candidate resource set corresponding to the first beam.

The transceiver unit 1201 is configured to receive, on a first time-frequency resource, first sidelink information from the second terminal device by using a third beam, where the first candidate resource set includes the first time-frequency resource.

In a possible implementation, the first indication information includes a correspondence between the first beam and the first candidate resource set, and the first candidate resource set; and

the correspondence between the first beam and the first candidate resource set is indicated by using a first sidelink transmission configuration indication SL TCI state identifier of a first reference signal.

In a possible implementation, the first SL TCI state identifier is carried in sidelink control information SCI and/or a medium access control control element MAC CE.

In a possible implementation, when determining the first candidate resource set corresponding to the first beam, the processing unit 1202 is configured to:

receive second indication information from at least one terminal device in a sensing window of the third beam by using the third beam, where the at least one terminal device includes the second terminal device, and second indication information of any one of the at least one terminal device includes a time-frequency resource of the any terminal device; and

determine, in a selection window of the third beam based on a time-frequency resource of the at least one terminal device, the first candidate resource set corresponding to the first beam.

In a possible implementation, the first sidelink information includes a second time-frequency resource, the first candidate resource set includes the second time-frequency resource, and the transceiver unit 1201 is further configured to:

receive third indication information from a third terminal device, where the third indication information includes a third time-frequency resource of the third terminal device; and
if the second time-frequency resource and the third time-frequency resource overlap, and a data priority of the third terminal device is higher than a data priority of the second terminal device, send conflict indication information to the second terminal device, where
the conflict indication information indicates that a conflict occurs on the second time-frequency resource.

In a possible implementation, the conflict indication information includes location information of an overlapping time-frequency resource of the second time-frequency resource and the third time-frequency resource, or the conflict indication information includes the second time-frequency resource.

In a possible implementation, the conflict indication information further includes information about the first beam associated with the second time-frequency resource.

In a possible implementation, the conflict indication information is carried in SCI or a MAC CE.

For another possible implementation of the communication apparatus, refer to related descriptions of the functions of the first terminal device in the method embodiment corresponding to FIG. 3. Details are not described herein.

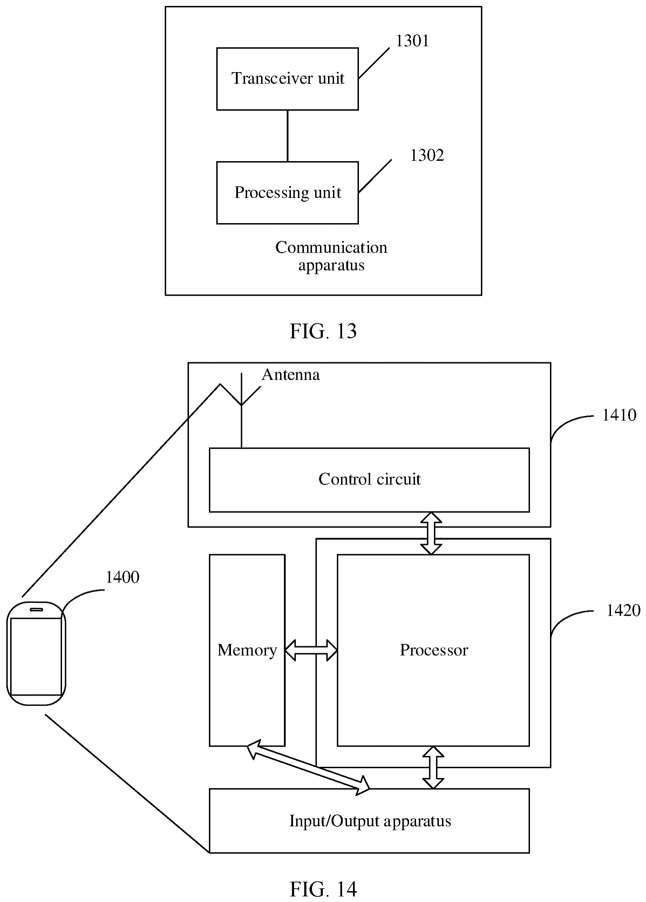

FIG. 13 is a diagram of a structure of another communication apparatus according to an embodiment of this application. The communication apparatus shown in FIG. 13 may be configured to perform some or all functions of the second terminal device in the method embodiment described in FIG. 3. The apparatus may be a second terminal device, an apparatus in the second terminal device, or an apparatus that can be used together with the second terminal device. The communication apparatus may alternatively be a chip or a chip system. The communication apparatus shown in FIG. 13 may include a transceiver unit 1301 and a processing unit 1302. Specifically:

The processing unit 1302 is configured to determine a first candidate resource set corresponding to a first beam, where the first beam is any beam in a beam set, and the beam set includes a plurality of beams.

The processing unit 1302 is configured to determine a first time-frequency resource based on the first candidate resource set.

The transceiver unit 1301 is configured to send first sidelink information to a first terminal device on the first time-frequency resource by using the first beam.

In a possible implementation, when determining the first candidate resource set corresponding to the first beam, the processing unit 1302 is configured to:
receive first indication information from the first terminal device, where the first indication information indicates the first beam and the first candidate resource set corresponding to the first beam.

In a possible implementation, the first indication information includes a correspondence between the first beam and the first candidate resource set, and the first candidate resource set; and
the correspondence between the first beam and the first candidate resource set is indicated by using a first sidelink transmission configuration indication SL TCI state identifier of a first reference signal.

In a possible implementation, the first SL TCI state identifier is carried in sidelink control information SCI and/or a medium access control control element MAC CE.

In a possible implementation, when determining the first candidate resource set corresponding to the first beam, the processing unit 1302 is configured to:

receive second indication information from another terminal device in a sensing window of the first beam by using the first beam; and
determine, in a selection window of the first beam based on a time-frequency resource indicated by the second indication information of the another terminal device, the first candidate resource set corresponding to the first beam.

In a possible implementation, when determining the first time-frequency resource based on the first candidate resource set, the processing unit 1302 is configured to:

determine the first time-frequency resource based on an intersection set of the first candidate resource set and a second candidate resource set, where
the second candidate resource set is a candidate resource set corresponding to a second beam, and the second beam is a neighboring beam of the first beam.

In a possible implementation, that the first beam and the second beam are adjacent beams is predefined, configured, or preconfigured; and/or

an included angle between a main lobe direction of the first beam and a main lobe direction of the second beam is less than or equal to a preset angle; and/or

a reference signal received power RSRP measurement result of the first beam and an RSRP measurement result of the second beam are greater than or equal to a first threshold; and/or

an absolute value of a difference between the reference signal received power RSRP measurement result of the first beam and the RSRP measurement result of the second beam is less than or equal to a second threshold.

In a possible implementation, the first sidelink information includes a second time-frequency resource, the first candidate resource set includes the second time-frequency resource, and the transceiver unit 1301 is further configured to:

receive conflict indication information from the first terminal device, where the conflict indication information indicates that a conflict occurs on the second time-frequency resource.

In a possible implementation, the conflict indication information includes location information of an overlapping time-frequency resource of the second time-frequency resource and a third time-frequency resource, or the conflict indication information includes the second time-frequency resource.

In a possible implementation, the third time-frequency resource is a time-frequency resource of a third terminal device, and a data priority of the third terminal device is higher than a data priority of a second terminal device.

In a possible implementation, the conflict indication information further includes information about the first beam associated with the second time-frequency resource.

In a possible implementation, the conflict indication information is carried in SCI or a MAC CE.

For another possible implementation of the communication apparatus, refer to related descriptions of the functions of the second terminal device in the method embodiment corresponding to FIG. 3. Details are not described herein.

In a possible implementation, when the first terminal device or the second terminal device is a chip, the transceiver unit may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing unit may be a processor. The processor may execute computer-executable instructions stored in a storage module, so that the chip performs the method in the embodiment in FIG. 4.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked pipeline stages (microprocessor without interlocked pipeline stages, MIPS) architecture, an advanced reduced instruction set computing machines (advanced RISC machines, ARM) architecture, a network processor (network processor, NP) architecture, or the like. The processor may be a single-core or multi-core processor.

The storage module may be a storage module inside the chip, for example, a register or a cache. Alternatively, the storage module may be a storage module, for example, a ROM or another type of static storage device that can store static information and instructions, or a RAM, located outside the chip.

It should be noted that a function corresponding to each of the processor and the interface may be implemented by using a hardware design, a software design, or a combination of software and hardware. This is not limited herein.

FIG. 14 is a diagram of a structure of another communication apparatus according to an embodiment of this application. As shown in FIG. 14, the communication apparatus may be the terminal device described in embodiments of this application, and is configured to implement functions of the terminal device in FIG. 3. For example, the terminal device may be the first terminal device, the second terminal device, or the like in the foregoing embodiments of this application. For ease of description, FIG. 14 shows only main components of the terminal device 1400. As shown in FIG. 14, the terminal device 1400 includes a processor, a memory, a control circuit, an antenna, and an input/output apparatus. The processor is mainly configured to: process a communication protocol and communication data, control the entire terminal device 1400, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

For example, the terminal device 1400 is a mobile phone. After the terminal device 1400 is powered on, the processor may read a software program in a storage unit, interpret and execute instructions of the software program, and process data of the software program. When data needs to be sent in a wireless manner, the processor performs baseband processing on the to-be-sent data and then outputs a baseband signal to the control circuit. The control circuit performs radio frequency processing on the baseband signal and then sends a radio frequency signal in a form of an electromagnetic wave through the antenna. When data is sent to the terminal device 1400, the control circuit receives a radio frequency signal through the antenna, converts the radio frequency signal into a baseband signal, and outputs the baseband signal to the processor. The processor converts the baseband signal into data and processes the data.

A person skilled in the art may understand that, for ease of description, FIG. 14 shows only one memory and only one processor. In some embodiments, the terminal device 1400 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal device 1400, execute the software program, and process the data of the software program. The processor in FIG. 14 integrates functions of the baseband processor and the central processing unit. A person skilled in the art may understand that the baseband processor and the central processing unit may alternatively be separate processors, and are interconnected by using a technology such as a bus. The terminal device 1400 may include a plurality of baseband processors to adapt to different network standards. The terminal device 1400 may include a plurality of central processing units to enhance a processing capability of the terminal device 1400. Components of the terminal device 1400 may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of the software program, and the processor executes the software program to implement a baseband processing function.

In an example, the antenna and the control circuit that have receiving and sending functions may be considered as a transceiver unit 1410 of the terminal device 1400, and the processor having a processing function may be considered as a processing unit 1420 of the terminal device 1400. As shown in FIG. 14, the terminal device 1400 includes the transceiver unit 1410 and the processing unit 1420. The transceiver unit may also be referred to as a transceiver, a transceiver machine, a transceiver apparatus, or the like. Optionally, a component configured to implement a receiving function in the transceiver unit 1410 may be considered as a receiving unit, and a component configured to implement a sending function in the transceiver unit 1410 may be considered as a sending unit. That is, the transceiver unit 1410 includes the receiving unit and the sending unit. For example, the receiving unit may also be referred to as a receiver machine, a receive, a receiving circuit, or the like, and the sending unit may also be referred to as a transmit machine, a transmitter, a transmitting circuit, or the like. The processing unit 1420 may also be referred to as a processor, a processing board, a processing apparatus, or the like.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   determining a first candidate resource set corresponding to a first beam, wherein the first beam is any beam in a beam set, and the beam set comprises a plurality of beams;
   determining a first time-frequency resource based on the first candidate resource set; and
   sending first sidelink information to a first terminal device on the first time-frequency resource by using the first beam.

2. The method according to claim 1, wherein determining the first candidate resource set corresponding to the first beam comprises:
   receiving first indication information from the first terminal device, wherein the first indication information indicates the first beam and the first candidate resource set corresponding to the first beam.

3. The method according to claim 2, wherein the first indication information comprises a correspondence between the first beam and the first candidate resource set, and the first candidate resource set; and
   the correspondence between the first beam and the first candidate resource set is indicated by using a first sidelink transmission configuration indication SL TCI state identifier of a first reference signal.

4. The method according to claim 3, wherein the first SL TCI state identifier is carried in sidelink control information SCI and/or a medium access control control element MAC CE.

5. The method according to any one of claims 1 to 4, wherein determining the first candidate resource set corresponding to the first beam comprises:

   receiving second indication information from another terminal device in a sensing window of the first beam by using the first beam; and
   determining, in a selection window of the first beam based on a time-frequency resource indicated by the second indication information of the another terminal device, the first candidate resource set corresponding to the first beam.

6. The method according to any one of claims 1 to 5, wherein determining the first time-frequency resource based on the first candidate resource set comprises:

determining the first time-frequency resource based on an intersection set of the first candidate resource set and a second candidate resource set, wherein

the second candidate resource set is a candidate resource set corresponding to a second beam, and the second beam is a neighboring beam of the first beam.

7. The method according to claim 6, wherein

that the first beam and the second beam are adjacent beams is predefined, configured, or preconfigured; and/or an included angle between a main lobe direction of the first beam and a main lobe direction of the second beam is less than or equal to a preset angle; and/or

a reference signal received power RSRP measurement result of the first beam and an RSRP measurement result of the second beam are greater than or equal to a first threshold; and/or

an absolute value of a difference between the reference signal received power RSRP measurement result of the first beam and the RSRP measurement result of the second beam is less than or equal to a second threshold.

8. The method according to any one of claims 1 to 7, wherein the first sidelink information comprises a second time-frequency resource, the first candidate resource set comprises the second time-frequency resource, and the method further comprises:

receiving conflict indication information from the first terminal device, wherein the conflict indication information indicates that a conflict occurs on the second time-frequency resource.

9. The method according to claim 8, wherein the conflict indication information comprises location information of an overlapping time-frequency resource of the second time-frequency resource and a third time-frequency resource, or the conflict indication information comprises the second time-frequency resource.

10. The method according to claim 9, wherein the third time-frequency resource is a time-frequency resource of a third terminal device, and a data priority of the third terminal device is higher than a data priority of a second terminal device.

11. The method according to any one of claims 8 to 10, wherein the conflict indication information further comprises information about the first beam associated with the second time-frequency resource.

12. The method according to any one of claims 8 to 11, wherein the conflict indication information is carried in SCI or a MAC CE.

13. A communication method, wherein the method comprises:

determining a first candidate resource set corresponding to a first beam, wherein the first beam is any beam in a beam set, and the beam set comprises a plurality of beams;

sending first indication information to a second terminal device, wherein the first indication information indicates the first beam and the first candidate resource set corresponding to the first beam; and

receiving, on the first time-frequency resource, first sidelink information from the second terminal device by using a third beam, wherein the first candidate resource set comprises the first time-frequency resource.

14. The method according to claim 13, wherein the first indication information comprises a correspondence between the first beam and the first candidate resource set, and the first candidate resource set; and

the correspondence between the first beam and the first candidate resource set is indicated by using a first sidelink transmission configuration indication SL TCI state identifier of a first reference signal.

15. The method according to claim 14, wherein the first SL TCI state identifier is carried in sidelink control information SCI and/or a medium access control control element MAC CE.

16. The method according to any one of claims 13 to 15, wherein determining the first candidate resource set corresponding to the first beam comprises:

receiving second indication information from at least one terminal device in a sensing window of the third beam by using the third beam, wherein the at least one terminal device comprises the second terminal device, and second indication information of any one of the at least one terminal device comprises a time-frequency resource of the any terminal device; and

determining, in a selection window of the third beam based on a time-frequency resource of the at least one terminal device, the first candidate resource set corresponding to the first beam.

17. The method according to any one of claims 13 to 16, wherein the first sidelink information comprises a second time-frequency resource, the first candidate resource set comprises the second time-frequency resource, and the method further comprises:

receiving third indication information from a third terminal device, wherein the third indication information comprises a third time-frequency resource of the third terminal device; and
if the second time-frequency resource and the third time-frequency resource overlap, and a data priority of the third terminal device is higher than a data priority of the second terminal device, sending conflict indication information to the second terminal device, wherein
the conflict indication information indicates that a conflict occurs on the second time-frequency resource.

18. The method according to claim 17, wherein the conflict indication information comprises location information of an overlapping time-frequency resource of the second time-frequency resource and the third time-frequency resource, or the conflict indication information comprises the second time-frequency resource.

19. The method according to claim 17 or 18, wherein the conflict indication information further comprises information about the first beam associated with the second time-frequency resource.

20. The method according to any one of claims 17 to 19, wherein the conflict indication information is carried in SCI or a MAC CE.

21. A communication apparatus, comprising:

a processing unit, configured to determine a first candidate resource set corresponding to a first beam, wherein the first beam is any beam in a beam set, and the beam set comprises a plurality of beams, wherein
the processing unit is configured to determine a first time-frequency resource based on the first candidate resource set; and
a transceiver unit, configured to send first sidelink information to a first terminal device on the first time-frequency resource by using the first beam.

22. The apparatus according to claim 21, wherein when determining the first candidate resource set corresponding to the first beam, the processing unit is configured to:
receive first indication information from the first terminal device, wherein the first indication information indicates the first beam and the first candidate resource set corresponding to the first beam.

23. The apparatus according to claim 22, wherein the first indication information comprises a correspondence between the first beam and the first candidate resource set, and the first candidate resource set; and
the correspondence between the first beam and the first candidate resource set is indicated by using a first sidelink transmission configuration indication SL TCI state identifier of a first reference signal.

24. The apparatus according to claim 23, wherein the first SL TCI state identifier is carried in sidelink control information SCI and/or a medium access control control element MAC CE.

25. The apparatus according to any one of claims 21 to 24, wherein when determining the first candidate resource set corresponding to the first beam, the processing unit is configured to:

receive second indication information from another terminal device in a sensing window of the first beam by using the first beam; and
determine, in a selection window of the first beam based on a time-frequency resource indicated by the second indication information of the another terminal device, the first candidate resource set corresponding to the first beam.

26. The apparatus according to any one of claims 21 to 25, wherein when determining the first time-frequency resource based on the first candidate resource set, the processing unit is configured to:

determine the first time-frequency resource based on an intersection set of the first candidate resource set and a second candidate resource set, wherein

the second candidate resource set is a candidate resource set corresponding to a second beam, and the second beam is a neighboring beam of the first beam.

27. The apparatus according to claim 26, wherein

that the first beam and the second beam are adjacent beams is predefined, configured, or preconfigured; and/or
an included angle between a main lobe direction of the first beam and a main lobe direction of the second beam is less than or equal to a preset angle; and/or
a reference signal received power RSRP measurement result of the first beam and an RSRP measurement result of the second beam are greater than or equal to a first threshold; and/or
an absolute value of a difference between the reference signal received power RSRP measurement result of the first beam and the RSRP measurement result of the second beam is less than or equal to a second threshold.

28. The apparatus according to any one of claims 21 to 27, wherein the first sidelink information comprises a second time-frequency resource, the first candidate resource set comprises the second time-frequency resource, and the transceiver unit is further configured to:
receive conflict indication information from the first terminal device, wherein the conflict indication information indicates that a conflict occurs on the second time-frequency resource.

29. The apparatus according to claim 28, wherein the conflict indication information comprises location information of an overlapping time-frequency resource of the second time-frequency resource and a third time-frequency resource, or the conflict indication information comprises the second time-frequency resource.

30. The apparatus according to claim 29, wherein the third time-frequency resource is a time-frequency resource of a third terminal device, and a data priority of the third terminal device is higher than a data priority of a second terminal device.

31. The apparatus according to any one of claims 28 to 30, wherein the conflict indication information further comprises information about the first beam associated with the second time-frequency resource.

32. The apparatus according to any one of claims 18 to 31, wherein the conflict indication information is carried in SCI or a MAC CE.

33. A communication apparatus, wherein the apparatus comprises:

a processing unit, configured to determine a first candidate resource set corresponding to a first beam, wherein the first beam is any beam in a beam set, and the beam set comprises a plurality of beams; and
a transceiver unit, configured to send first indication information to a second terminal device, wherein the first indication information indicates the first beam and the first candidate resource set corresponding to the first beam, wherein
the transceiver unit is configured to receive, on the first time-frequency resource, first sidelink information from the second terminal device by using a third beam, wherein the first candidate resource set comprises the first time-frequency resource.

34. The apparatus according to claim 33, wherein the first indication information comprises a correspondence between the first beam and the first candidate resource set, and the first candidate resource set; and
the correspondence between the first beam and the first candidate resource set is indicated by using a first sidelink transmission configuration indication SL TCI state identifier of a first reference signal.

35. The apparatus according to claim 34, wherein the first SL TCI state identifier is carried in sidelink control information SCI and/or a medium access control control element MAC CE.

36. The apparatus according to any one of claims 33 to 35, wherein when determining the first candidate resource set corresponding to the first beam, the processing unit is configured to:

receive second indication information from at least one terminal device in a sensing window of the third beam by using the third beam, wherein the at least one terminal device comprises the second terminal device, and second indication information of any one of the at least one terminal device comprises a time-frequency resource of the any terminal device; and

determine, in a selection window of the third beam based on a time-frequency resource of the at least one terminal device, the first candidate resource set corresponding to the first beam.

37. The apparatus according to any one of claims 33 to 36, wherein the first sidelink information comprises a second time-frequency resource, the first candidate resource set comprises the second time-frequency resource, and the transceiver unit is further configured to:

receive third indication information from a third terminal device, wherein the third indication information comprises a third time-frequency resource of the third terminal device; and

if the second time-frequency resource and the third time-frequency resource overlap, and a data priority of the third terminal device is higher than a data priority of the second terminal device, send conflict indication information to the second terminal device, wherein

the conflict indication information indicates that a conflict occurs on the second time-frequency resource.

38. The apparatus according to claim 37, wherein the conflict indication information comprises location information of an overlapping time-frequency resource of the second time-frequency resource and the third time-frequency resource, or the conflict indication information comprises the second time-frequency resource.

39. The apparatus according to claim 37 or 38, wherein the conflict indication information further comprises information about the first beam associated with the second time-frequency resource.

40. The apparatus according to any one of claims 37 to 39, wherein the conflict indication information is carried in SCI or a MAC CE.

41. A communication apparatus, comprising:

one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 1 to 12.

42. A communication apparatus, comprising:

one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 13 to 20.

43. A computer-readable storage medium, wherein the storage medium stores a computer program or instructions, and when the computer program or the instructions are executed by a computer, the method according to any one of claims 1 to 12 is implemented.

44. A computer-readable storage medium, wherein the storage medium stores a computer program or instructions, and when the computer program or the instructions are executed by a computer, the method according to any one of claims 13 to 20 is implemented.

45. A computer program product, comprising computer program code, wherein when the computer program code is run on a computer, the method according to any one of claims 1 to 12 is implemented.

46. A computer program product, comprising computer program code, wherein when the computer program code is run on a computer, the method according to any one of claims 13 to 20 is implemented.

47. A chip or a chip system, comprising an input/output interface and a processing circuit, wherein the input/output interface is configured to exchange information or data, and the processing circuit is configured to run instructions, to enable an apparatus on which the chip or the chip system is installed to perform the method according to claims 1 to 12.

**48.** A chip or a chip system, comprising an input/output interface and a processing circuit, wherein the input/output interface is configured to exchange information or data, and the processing circuit is configured to run instructions, to enable an apparatus on which the chip or the chip system is installed to perform the method according to claims 13 to 20.

FIG. 1

FIG. 2

Second terminal
device

First terminal
device

S301: Determine a first
candidate resource set
corresponding to a first beam

S302: Determine a first time-
frequency resource based on the
first candidate resource set

S303: Send first sidelink information to
the first terminal device on the first time-
frequency resource by using the first beam

FIG. 3

UE-B          UE-A        UE-B          UE-A        UE-B          UE-A

P-1                        P-2                        P-3

FIG. 4

Beam 1   Beam 2   ⋯   Beam k   ⋯                              Beam k

Sensing window
of the beam 1

Sensing window
of the beam 2

Sensing window
of the beam k

Sensing window
of the beam k

SSB/CSI-RS sending time

FIG. 5

FIG. 6

☐ Candidate time-frequency resource

◼ Time-frequency resource
selected for sending to the UE-B

◼ Time-frequency resource
selected for sending to the UE-C

▨ Time-frequency resource
causing interference

Selection window
of the UE-A
(to the UE-B)

Selection window
of the UE-B
(to the UE-A)

The UE-A selects resources
based on candidate resource
sets fed back by the UE-B and
the UE-C

Selection window
of the UE-C
(to the UE-A)

Resource that is reserved
by another UE (not the
UE-A) and that is sent to
the UE-C

Selection window
of the UE-A
(to the UE-B)

Selection window
of the UE-B
(to the UE-A)

Selection window
of the UE-C
(to the UE-A)

Information sent by the UE-A
to the UE-B interferes with
information sent by the another
UE to the UE-C

FIG. 7

Selection window
of a UE-1
(to the UE-A)

Selection window
of a UE-2
(to the UE-A)

☐ Candidate time-frequency
resource

▨ Time-frequency resource
causing interference

▨ Time-frequency resource
selected for sending to the UE-1

▨ Time-frequency resource
selected for sending to the UE-2

Obtain an intersection
set of candidate
resource sets

Selection window
of the UE-A

Feed back a candidate
resource set $S_{A,1}$

Selection window
of the UE-1
(to the UE-A)

TX1    RX

UE-A   TX2

Feed back a candidate
resource set $S_{A,2}$    RX

Selection window
of the UE-2
(to the UE-A)

FIG. 8

RSRP

First
threshold

Beam 1  Beam 2    Beam 3   Beam 4    Beam 5    Beam 6

FIG. 9

Selection window
of the UE-C

Send conflict
indication
information to
the UE-C

UE-C

Selection window
of the UE-A

Selection window
of the UE-B

RX

TX

UE-A

UE-B

The UE-C interferes with
receiving of sidelink
information of the UE-B

☐ Candidate time-frequency
resource

▇ Selected time-frequency
resource

▨ Time-frequency resource
causing interference

▨ Time-frequency resource
used for receiving

FIG. 10

Selection window
of the UE-C

Selection window
of the UE-B

UE-C

UE-B

TX

TX

RX

Send conflict
indication
information to
the UE-C

UE-A

Selection window
of the UE-A

The UE-C interferes with
receiving of sidelink
information of the UE-B

☐ Candidate time-frequency
resource

■ Selected time-frequency
resource

▨ Time-frequency resource
causing interference

▨ Time-frequency resource
used for receiving

FIG. 11

Transceiver unit          1201

Processing unit          1202

Communication
apparatus

FIG. 12

FIG. 13

FIG. 14

## INTERNATIONAL SEARCH REPORT

International application No.

**PCT/CN2024/074647**

### A. CLASSIFICATION OF SUBJECT MATTER

H04W72/02(2009.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, CNKI, WPABSC, ENTXTC, VEN, ENTXT, 3GPP: 资源, 选择, 确定, 冲突, 侧行, 侧链路, 波束, 候选, 目标, 终端, 用户设备, UE, resource, select, determine, conflict, sidelink, D2D, beam, candidate, target, terminal

### C. DOCUMENTS CONSIDERED TO BE RELEVANT

| Category* | Citation of document, with indication, where appropriate, of the relevant passages | Relevant to claim No. |
|---|---|---|
| X | CN 114391292 A (BEIJING XIAOMI MOBILE SOFTWARE CO., LTD.) 22 April 2022 (2022-04-22)<br>description, paragraphs [0059]-[0161] and [0182]-[0189], and figures 1-8 and 11 | 1-48 |
| A | WO 2020191769 A1 (GUANGDONG OPPO MOBILE TELECOMMUNICATIONS CORP., LTD.) 01 October 2020 (2020-10-01)<br>entire document | 1-48 |
| A | CN 111194057 A (VIVO MOBILE COMMUNICATION CO., LTD.) 22 May 2020 (2020-05-22)<br>entire document | 1-48 |
| A | CN 115486159 A (OFINNO TECHNOLOGIES, LLC) 16 December 2022 (2022-12-16)<br>entire document | 1-48 |
| A | US 2022015071 A1 (OFINNO, LLC) 13 January 2022 (2022-01-13)<br>entire document | 1-48 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 April 2024** | **08 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/074647**

| Patent document cited in search report | | | Publication date (day/month/year) | Patent family member(s) | | | Publication date (day/month/year) |
|---|---|---|---|---|---|---|---|
| CN | 114391292 | A | 22 April 2022 | None | | | |
| WO | 2020191769 | A1 | 01 October 2020 | None | | | |
| CN | 111194057 | A | 22 May 2020 | EP | 3890394 | A1 | 06 October 2021 |
| | | | | KR | 20210092819 | A | 26 July 2021 |
| | | | | WO | 2020108086 | A1 | 04 June 2020 |
| | | | | US | 2021298015 | A1 | 23 September 2021 |
| CN | 115486159 | A | 16 December 2022 | EP | 4029330 | A1 | 20 July 2022 |
| | | | | EP | 4029330 | B1 | 02 November 2022 |
| | | | | KR | 20230048478 | A | 11 April 2023 |
| | | | | JP | 2023536378 | A | 25 August 2023 |
| | | | | US | 2022232530 | A1 | 21 July 2022 |
| | | | | US | 11622344 | B2 | 04 April 2023 |
| | | | | US | 2023199723 | A1 | 22 June 2023 |
| | | | | EP | 4185034 | A1 | 24 May 2023 |
| | | | | WO | 2022035706 | A1 | 17 February 2022 |
| US | 2022015071 | A1 | 13 January 2022 | US | 2022369292 | A1 | 17 November 2022 |
| | | | | EP | 4210414 | A1 | 12 July 2023 |
| | | | | WO | 2021163699 | A1 | 19 August 2021 |
| | | | | CA | 3165739 | A1 | 19 August 2021 |
| | | | | KR | 20220140809 | A | 18 October 2022 |
| | | | | US | 11419096 | B2 | 16 August 2022 |
| | | | | EP | 3895490 | A1 | 20 October 2021 |
| | | | | EP | 3895490 | B1 | 05 April 2023 |
| | | | | JP | 2023508233 | A | 01 March 2023 |
| | | | | JP | 7262034 | B2 | 21 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310151168